(19) Europäisches Patentamt
European Patent Office
Office européen des brevets

(11) **EP 3 507 005 B1**

(12) **EUROPÄISCHE PATENTSCHRIFT**

(45) Veröffentlichungstag und Bekanntmachung des Hinweises auf die Patenterteilung:
**21.07.2021 Patentblatt 2021/29**

(21) Anmeldenummer: **17732036.3**

(22) Anmeldetag: **31.05.2017**

(51) Int Cl.:
**B01J 20/14** *(2006.01)* **B01J 20/28** *(2006.01)*
**B01J 20/32** *(2006.01)* **C02F 1/28** *(2006.01)*

(86) Internationale Anmeldenummer:
**PCT/EP2017/063105**

(87) Internationale Veröffentlichungsnummer:
**WO 2018/041429 (08.03.2018 Gazette 2018/10)**

(54) **VERWENDUNG EINES VOLUMENKÖRPERS ALS FILTRATIONSMITTEL UND/ODER SORPTIONSMITTEL ZUR REGENERATION MITTELS RÜCKSPÜLUNG**

USE OF A VOLUME BODY AS FILTRATION MEANS AND/OR SORPTION MEANS FOR REGENERATION BY BACKWASHING

UTILISATION D'UN CORPS VOLUMIQUE EN TANT QUE MOYEN DE FILTRATION ET/OU MOYEN DE SORPTION POUR LA RÉGÉNÉRATION PAR CONTRE-LAVAGE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **30.08.2016 RU 2016135264**
**30.01.2017 RU 2017102956**
**18.04.2017 RU 2017113413**

(43) Veröffentlichungstag der Anmeldung:
**10.07.2019 Patentblatt 2019/28**

(73) Patentinhaber: **LightOre SA**
**1201 Geneve (CH)**

(72) Erfinder:
• **KOSJAKOW, Alexander Viktorowitsch**
**Woronesch Gebiet**
**Stadt Woronesch 394051 (RU)**
• **BLAGOW, Andrej Wladimirowitsch**
**Moskau 103536 (RU)**
• **KULIGIN, Sergej Wladimirowitsch**
**Woronesch Gebiet**
**Stadt Woronesch 394007 (RU)**
• **DEMIN, Mikhail Wladimirowitsch**
**Uljanowsk 432064 (RU)**

• **BELOW, Petr Wasiljewitsch**
**Uljanowsk 432072 (RU)**
• **ISCHKOW, Alexander Dmitrijewitsch**
**Moskau 115597 (RU)**
• **SALNIKOW, Evgenij Pawlowitsch**
**Woronesch Gebiet**
**Stadt Woronesch 394055 (RU)**
• **ROWOWOJ, Wadim Witaljewitsch**
**Moskau 119027 (RU)**

(74) Vertreter: **Franke, Markus et al**
**Patentanwälte Sturm Weilnau Franke**
**Partnerschaft mbB**
**Unter den Eichen 5 (Haus C-Süd)**
**65195 Wiesbaden (DE)**

(56) Entgegenhaltungen:
**WO-A1-03/072498 JP-A- 2004 130 268**
**US-A1- 2007 189 944 US-A1- 2009 280 313**
**US-A1- 2011 183 142**

• **Mikinori Hotta ET AL: "Pore-size control in porous SiC ceramics prepared by spark plasma sintering", Ceramic Society of Japan. Journal, vol. 120, no. 1402, 1 June 2012 (2012-06-01), pages 243-247, XP055741074, Tokyo, JP ISSN: 1882-0743, DOI: 10.2109/jcersj2.120.243**

**EP 3 507 005 B1**

**Beschreibung**

Die vorliegende Erfindung betrifft die Verwendung eines Volumenkörpers als Filtrationsmittel und/oder Sorptionsmittel, insbesondere im Bereich der Wasseraufbereitung.

Typische Anwendungsbereiche bilden die Trinkwasseraufbereitung, Filtereinrichtungen für Schwimmbäder, Filtereinrichtungen für Fischzuchten, Filtereinrichtungen und Vorfiltereinrichtungen für Osmoseanlagen, Filtereinrichtungen für Aquarien, biologische Wasseraufbereitungsanlagen und die Abwasseraufbereitung.

Die Verwendung des Volumenkörpers kann insbesondere zusammen mit weiteren Volumenkörpern der gleichen Art auch zur Reinigung von Flüssigkeiten im Bereich der Lebensmittel-, Pharma- und der chemischen Industrie verwendet werden.

Aus dem Stand der Technik ist bekannt, Sand und/oder Kies als Filtermedium einzusetzen. Durch eine Schüttung der vorgenannten Materialien wird ein Filterbett erzeugt, wobei das erzeugte Filterbett für die zu filternde Flüssigkeit durchlässig ist, wobei aufgrund der porösen Struktur des Filterbetts die in der Flüssigkeit suspendierten Feststoffe in dem Filterbett zurückgehalten werden.

Aus der DE 100 22 798 A1 ist ein keramisches Material für die Verwendung als Filtermaterial, zur Absorption und Speicherung von Wasser und zur Absorption großer Moleküle, wie Bakterien, bekannt, wobei das keramische Material $SiO_2$ und $Na_2O$ und/oder $K_2O$ umfasst, das eine Porosität größer 60 % und Poren aufweist, von denen mehr als 70 % eine Porengröße im Bereich zwischen 0,1 und 15 $\mu$m besitzen.

Aus der DE 101 63 977 A1 ist des Weiteren ein Trägerkörper, insbesondere zum Befüllen von Filtereinrichtungen, für die Besiedlung von Mikroorganismen bekannt, welcher eine durchgängige Porenstruktur mit Poren, die einen maximalen Porendurchmesser von 500 $\mu$m aufweisen, bekannt.

Ferner ist aus der US 2007/0189944 A1 ein Mikropartikel mit einem soliden Kern und einer porösen Schale zur Verwendung bei Flüssigkeitschromatographie bekannt.

Ferner offenbart die US 2009/0280313 A1 eine Kachel mit einer porösen Struktur, die der Verbesserung der Luftfeuchtigkeit durch Aufnahme und Abgabe von Wasser bzw. Wasserdampf dient.

Aus der WO 03/072498 A1 ist ferner ein Schutzmaterial zum Schutz gegen chemische/biologischen Kampfstoffe bekannt, wobei das Material Poren aufweist.

Die JP 2004 130268 A offenbart ein Filtermedium mit einem geringen spezifischen Gewicht.

In der US 2011/0183142 A1 sind Schleifkornagglomerate, Verfahren zur Herstellung von Schleifkornagglomeraten sowie die Verwendung von Schleifkornagglomeraten zur Herstellung von Schleifmitteln. Die Schleifkornagglomerate bestehen. Die Schleifkornagglomerate sind aufgebaut aus einer Vielzahl von Schleifkörnern, wobei die Schleifkörner ausgewählt sind aus der Gruppe Korund, Schmelzkorund, Sinterkorund, Zirkonkorund, Siliziumcarbid, Borcarbid, kubisches Bornitrid, Diamant und/oder Gemischen davon und mit einem anorganischen Binder miteinander verbunden sind.

Aufgabe der vorliegenden Erfindung ist es, einen Volumenkörper als Filtrationsmittel und/oder Sorptionsmittel zu verwenden, der besonders gute Filtrations- und/oder Sorptionseigenschaften aufweist und zudem eine einfache Regeneration des Volumenkörpers ermöglicht.

Gelöst werden diese Aufgaben durch eine Verwendung, die die Merkmale des Patentanspruchs 1 aufweist.

Der Patentanspruch 1 sieht vor einen Volumenkörper zu verwenden, der vorzugsweise mit weiteren Volumenkörpern in Form einer regellosen Schüttung in Filtereinrichtung Verwendung findet, wobei der Volumenkörper zumindest eine äußere Schicht aufweist, die aus einem abrasiven Material besteht, wobei das Material durch miteinander verbundene Partikel gebildet ist, wobei das Material eine offene Porosität aufweist, wobei die offene Porosität durch zwischen den Partikeln ausgebildete und miteinander in Verbindung stehende Hohlräume gebildet ist.

Durch die offene Porosität ist sichergestellt, dass ein zu filterndes Fluid die äußere Schicht durchsetzt, wobei in dem zu filternden Fluid vorhandene Verunreinigungen, beispielsweise in dem Fluid suspendierte Feststoffpartikel oder sonstige unerwünschte Verunreinigungen des zu filternden Mediums beim Durchgang durch die äußere Schicht in dem Volumenkörper, insbesondere in Poren des Volumenkörpers zurückgehalten werden.

Aufgrund der porösen Struktur des Volumenkörpers weist dieser bzw. ein durch vorgenannte Volumenkörper gebildetes Material eine besonders große spezifische Oberfläche auf, was sich vorteilhaft auf die Filtrationswirkung und/oder Sorptionswirkung auswirkt.

Das Merkmal, das die äußere Schicht des Volumenkörpers aus einem abrasiven Material besteht, ist dahingehend zu verstehen, dass das Material, welches zumindest die äußere Schicht des Volumenkörpers bildet, eine mittlere Abriebfestigkeit aufweist und folglich bei auf den Volumenkörper einwirkenden Reibkräften Material der äußeren Schicht abgetragen wird.

Bei Verwendung des Volumenkörpers werden die Hohlräume bzw. die effektive Oberfläche des Volumenkörpers zunehmend durch gefilterte bzw. sorbierte Stoffe belegt, wodurch sich die Filterwirkung bzw. die Sorptionswirkung des Volumenkörpers verringert.

Die abrasiven Eigenschaften des Volumenkörpers ermöglichen es, die Filterwirkung und/oder Sorptionswirkung des Volumenkörpers in einfacher Art und Weise zu regenerieren. Zu diesem Zweck kann in einem Zustand, in dem die an eine Oberfläche der Außenkontur des Volumenkörpers angrenzenden Poren bzw. die Oberflächen der Poren durch gefiltertes und/oder sorbiertes Material belegt sind, einen Teilbereich der äußeren Schicht, der an die Oberfläche angrenzt, oder die gesamte äußere Schicht durch eine geeignete mechanische Behandlung entfernt werden. Dadurch werden darunterliegende Bereiche des Volumenkörpers, die im Wesentlichen frei von Verunreinigungen bzw. von gefiltertem Material sind, wieder von außen zugänglich gemacht. Auf diese Weise wird die Filtrationswirkung und/oder Sorptionswirkung des Volumenkörpers wiederhergestellt.

Das Abtragen von Material der äußeren Schicht erfolgt vorzugsweise durch Einwirken von weiteren Füllkörpern der gleichen Art.

Insbesondere erfolgt die Regeneration des Volumenkörpers dadurch, dass der Volumenkörper mit einer Vielzahl von weiteren Volumenkörpern in einer Filtereinrichtung als Schüttgut angeordnet ist, wobei zwecks Regeneration der in der Filtereinrichtung angeordneten Volumenkörper ein durch die Volumenkörper gebildetes Filterbett verwirbelt wird, beispielsweise indem die Filtereinrichtung in Gegenstromspülung betrieben wird, wobei aufgrund der turbulenten Bewegung der Volumenkörper diese mit anderen Volumenkörpern derart in Kontakt kommen, dass aufgrund der Reibung der Volumenkörper untereinander Material der äußeren Schicht des jeweiligen Volumenkörpers abgerieben wird. Dieses mit Fremdstoffen des gefilterten Mediums belegte, abgetragene Material kann beispielsweise mittels der Gegenstromspülung aus der Filtereinrichtung herausgeschwemmt und somit aus der Filtereinrichtung entfernt werden.

Die das Material der äußeren Schicht bildenden Partikel sind vorzugsweise druckfest und weisen harte, scharfe Schneidkanten auf.

Bei der Verwendung des Volumenkörpers werden die Partikel in der Regel nicht zerstört. Es ist aber durchaus denkbar, dass an der Oberfläche ausgebildete Partikel insbesondere bei der Regeneration absplittern, wodurch darunter liegende Teilbereiche des Volumenkörpers zugänglich werden.

Insbesondere beim Prozess der Rückspülung zwecks Regeneration werden bei Kontaktierung von zwei Volumenkörpern durch die scharfen Schneidkanten der Partikel des einen Volumenkörpers an dem jeweils anderen Volumenkörper adsorbierte Verunreinigungen von diesem entfernt und die Poren gereinigt. Während der Verwendung des Volumenkörpers und insbesondere beim Prozess der Rückspülung verlieren die Partikel, die sich an der Oberfläche des Volumenkörpers befinden, allmählich ihre Verbindung mit den anderen Partikeln und lösen sich aus dem Material ab. Dadurch werden angrenzende, von Verunreinigungen freie Bereiche des Volumenkörpers zugänglich, wodurch die Filtrationswirkung und/oder Sorptionswirkung des Volumenkörpers erhalten bleibt und/oder wiederhergestellt wird.

Um den Materialabtrag der äußeren Schicht zu begünstigen und ein Verblocken der Volumenkörper zu verringern, wird es als vorteilhaft angesehen, wenn der Volumenkörper eine raue Oberfläche aufweist.

Vorzugsweise weist der Volumenkörper im Bereich der äußeren Schicht nach außen gerichtete Vorsprünge auf, wobei eine Höhe des jeweiligen Vorsprungs $\geq 0{,}5$ $\mu$m und $\leq 150$ $\mu$m, insbesondere $\geq 1$ $\mu$m und $\leq 40$ $\mu$m beträgt. Dadurch ist bei Verwendung einer Vielzahl derartiger Volumenkörper das Verblocken der Volumenkörper und somit eine Abdecken der Öffnungen der Poren des jeweiligen Volumenkörpers bei Kontakt mit einem weiteren Volumenkörper verhindert, was sich nachteilhaft auf die Filtrationswirkung und/oder Sorptionswirkung auswirken würde. Zudem wird der Abrieb zwischen den Volumenkörpern zwecks Regeneration der Volumenkörper verbessert. Vorzugsweise weisen die Poren der äußeren Schicht einen Durchmesser von $\geq 0{,}5$ $\mu$m und $\leq 40$ $\mu$m auf. Als besonders vorteilhaft wird es angesehen, wenn zumindest 60 Flächenprozent, insbesondere 70 Flächenprozent bis 80 Flächenprozent der Oberfläche einer Außenkontur des Volumenkörpers durch Poren gebildet ist.

Als besonders vorteilhaft wird es angesehen, wenn das jeweilige Partikel eine Ausdehnung von $\leq 100$ $\mu$m, vorzugsweise $\leq 40$ $\mu$m aufweist.

Erfindungsgemäß sind die Partikel miteinander verschmolzen und/oder versintert.

Es ist durchaus denkbar, dass nicht nur die äußere Schicht des Volumenkörpers, sondern der gesamte Volumenkörper aus dem abrasiven Material besteht.

Als besonders vorteilhaft wird es angesehen, wenn die Porosität des Materials 20 % bis 85 %, insbesondere 60 % bis 80 %, beträgt. Unter dem Begriff Porosität wird in diesem Zusammenhang der Volumenanteil der Hohlräume am Gesamtvolumen verstanden.

Bei einer Porosität unterhalb von 20 % nimmt die Filtrationswirkung stark ab. Oberhalb von 85 % nimmt die mechanische Stabilität stark ab.

Die offene Porosität einer Probe kann beispielsweise mittels einer Gas- oder Flüssigkeitsmethode bestimmt werden.

Bei der Gasmethode wird das Verhältnis des Gesamtporenvolumen der Probe gefüllt mit Gas (Luft, Stickstoff usw.) zum Volumen des festen Körpers bestimmt, wobei der Differenzdruck in einer Kammer von bekanntem Volumen und in einer Kammer mit der Probe des Festkörpers gemessen wird.

Bei der Flüssigkeitsmethode wird die Probe mit einer Flüssigkeit gesättigt und anschließend, anhand des Massenunterschieds der mit einer Flüssigkeit gesättigten Probe in der Luft und in der Flüssigkeit der Koeffizient der offenen Porosität wie folgt berechnet:

$$M0 = \frac{M3 - M1}{M3 - M2} 100\%.$$

dabei ist

M1 - Masse der trockenen Probe in der Luft;

M2 - Masse der gesättigten Probe im der Flüssigkeit;

M3 - Masse der gesättigten Probe in der Luft;

M0 - Faktor der offenen Porosität in Prozent.

In einer besonders bevorzugten Ausführungsform des Volumenkörpers besteht das Material der äußeren Schicht im Wesentlichen oder vollständig aus Siliciumdioxid, insbesondere besteht das Material der äußeren Schicht aus Diatomit. Der Begriff "im Wesentlichen" ist in diesem Zusammenhang derart zu verstehen, dass das Material der äußeren Schicht zu mindestens 70 Massenprozent aus Siliciumdioxid bzw. Diatomit besteht.

Der Vorteil bei der Verwendung von Diatomit als Material der äußeren Schicht besteht darin, dass Diatomit eine natürliche Porosität aufweist.

Als vorteilhaft wird es angesehen, wenn ein Verhältnis einer Längsabmessung des Volumenkörpers zu einer Querabmessung des Volumenkörpers ≤ 1,6 beträgt. In diesem Zusammenhang wird es als besonders vorteilhaft angesehen, wenn eine Außenkontur des Volumenkörpers die Form eines Rotationsellipsoids aufweist, wobei ein Verhältnis von der einen Halbachse zu der anderen Halbachse ≥ 1,0 und ≤ 1,6 beträgt, insbesondere die Außenkontur die Form einer Sphäre aufweist. Die Außenkontur in Form eines Rotationsellipsoids verbessert die Rieselfähigkeit und Anordnung der Volumenkörper in einer Schüttung, wodurch die Handhabung eines Materials bestehend aus Volumenkörpern der vorgenannten Art erleichtert ist. Zudem wird durch die rotationsellipsoidähnliche Form des jeweiligen Volumenkörpers die Regeneration, beispielsweise im Prozess der Rückspülung, verbessert. Darüber hinaus sind bei rotationsellipsoidähnlichen Volumenkörpern, insbesondere bei sphärischen Volumenkörpern, die Kontaktflächen bei einer Schüttung derartiger Volumenkörper zwischen den Volumenkörpern gering.

Um eine besonders gute Filterwirkung des Volumenkörpers, insbesondere bei einer Schüttung von Volumenkörpern, zu erreichen, ist vorgesehen, dass der äquivalente Durchmesser des Volumenkörpers ≥ 0,3 mm und ≤ 6,0 mm beträgt.

Hinsichtlich eines Material, das aus einer Vielzahl von Volumenkörpern gebildet ist, wird es als besonders vorteilhaft angesehen, wenn der äquivalente Durchmesser der das Material bildenden Volumenkörper ≥ 0,3 mm und ≤ 0,7 mm oder ≥ 0,7 mm und ≤ 1,7 mm oder ≥ 1,7 mm und ≤ 2,5 mm oder ≥ 2,5 mm und ≤ 6,0 mm beträgt.

Der äquivalente Durchmesser wird dadurch bestimmt, dass die Volumenkörper gesiebt werden, wobei der äquivalente Durchmesser dadurch definiert ist, dass dieser identisch ist mit einem Durchmesser einer Sphäre, die durch dieselbe Sieböffnung wie der entsprechende Volumenkörper durchgeht.

In einer bevorzugten Ausführungsform des Volumenkörpers weist dieser einen Kern auf, wobei die äußere Schicht den Kern umhüllt, vorzugsweise der Kern eine sphärische Form aufweist.

Der Kern kann insbesondere aus einem Material bestehen, dass sich vom Material der äußeren Schicht nach der chemischen Zusammensetzung und/oder der Massendichte und/oder der Porosität unterscheidet.

Dadurch ist es möglich, die physikalischen und chemischen Eigenschaften des Partikels, wie beispielsweise die Massendichte, durch eine entsprechende Gestaltung des Kerns, beispielsweise durch eine Gestaltung des Kerns als Hohlraum oder als Hohlkörper, anzupassen.

Dadurch ist es beispielsweise möglich, ein Filterbett zu bilden, das aus zumindest zwei Lagen besteht, wobei sich die Volumenkörper der einen Lage von den Volumenkörpern der anderen Lage in der Größe unterscheiden und dennoch, insbesondere beim Vorgang des Rückspülens, die Lagen stabil bleiben, insbesondere keine Vermischung der Lagen auftritt. Beispielsweise kann eine erste Lage aus größeren Volumenkörpern gebildet werden und eine zweite Lage aus kleineren Volumenkörpern gebildet werden, wobei die erste Lage der Filtrierung von gröberen Verunreinigungen und die zweite Lage der Filtrierung von feineren Verunreinigungen dienen. Um eine Durchmischung der Lagen zu erschweren, insbesondere beim Prozess der Rückspülung, wird es als vorteilhaft angesehen, wenn die Volumenkörper der ersten Lage einen Kern aufweisen, der als Hohlraum ausgebildet ist, und die Volumenkörper der zweiten Lage einen Kern aufweisen, der aus einem Material besteht, das eine höhere Massendichte als das Material der äußeren Schicht aufweist.

Als besonders vorteilhaft wird es angesehen, wenn der Kern als Vollkörper ausgebildet ist und vorzugsweise aus einem Material besteht, das sich vom Material der äußeren Schicht nach der chemischen Zusammensetzung und/oder der Massendichte und/oder der Porosität unterscheidet.

In einer vorteilhaften Weiterbildung ist vorgesehen, dass der Volumenkörper mehrere in einer radialen Richtung aufeinander folgende Schichten aufweist, insbesondere die jeweilige Schicht eine radial innen angrenzende innere Schicht und/oder den Kern umhüllt.

Um die Filtrationswirkung und/oder Sorptionswirkung des Volumenkörpers weiter zu verbessern, ist hinsichtlich eines Volumenkörpers mit einem Kern und/oder einem Volumenkörper mit zumindest einer inneren Schicht in einer bevorzugten Ausführungsform vorgesehen, dass der Kern und/oder die innere Schicht aus einem Material besteht, das sich vom Material der äußeren Schicht nach der chemischen Zusammensetzung und/oder der Massendichte und/oder der Porosität unterscheidet. Es ist durchaus denkbar und bevorzugt, wenn sich das Material des Kerns vom Material einer inneren Schicht unterscheidet und/oder wenn sich die Materialien innerer Schichten untereinander unterscheiden.

Aufgrund der offenen Porosität der äußeren Schicht kann das zu filternde Fluid in den Bereich des Kerns und/oder der angrenzenden inneren Schicht gelangen, wobei das den Kern bzw. die innere Schicht erreichende Fluid bereits von beim Durchtritt durch die äußere Schicht in der äußeren Schicht zurückgehaltenen, insbesondere gröberen Verunreinigungen oder bestimmten Stoffen befreit ist. Folglich können die Eigenschaften des Materials des Kerns bzw. der inneren Schicht derart gewählt werden, um die übrigen, typischerweise feineren Verunreinigungen oder andere chemische oder biologische Verunreinigungen zu filtern bzw. zu sorbieren. Beispielsweise kann der Kern bzw. die innere Schicht Poren mit einem geringeren Durchmesser als die Poren der äußeren Schicht aufweisen. Auch kann der Kern bzw. die innere Schicht beispielsweise entsprechend der zu filternden Stoffe dotiert sein und/oder Aktivkohle aufweisen.

Als besonders vorteilhaft wird angesehen, wenn der Kern und/oder eine innere Schicht aus einem soliden Glas oder einem Schaumglas besteht, vorzugsweise der Kern durch eine Mikroglasperle, insbesondere durch eine hohle Mikroglasperle gebildet ist. Dadurch kann beispielsweise mittels Sintern in besonders einfacher Art und Weise eine stabile Verbindung zwischen dem Kern und der äußeren Schicht hergestellt werden. Durch die Gestaltung des Kerns und/oder der inneren Schicht aus einem soliden Glas bzw. einem Schaumglas, weist der Volumenkörper eine besonders hohe Stabilität auf, sodass eine Zerstörung des Volumenkörpers, beispielsweise aufgrund des Eigengewichts der Volumenkörper in einer regellosen Schüttung, verhindert und/oder vermieden ist.

Hinsichtlich einer besonders guten Filtrationswirkung des Volumenkörpers ist in einer bevorzugten Ausführungsform vorgesehen, dass eine innere Schicht und/oder der Kern Poren aufweist, wobei eine arithmetisch gemittelter Durchmesser dieser Poren geringer ist als die arithmetisch gemittelter Durchmesser der Poren der äußeren Schicht.

Um die Filtrationswirkung des Volumenkörpers, insbesondere hinsichtlich Spurenstoffen, wie beispielsweise Arzneimittelrückständen, zu verbessern, wird es als vorteilhaft angesehen, wenn der Kern und/oder eine der inneren Schichten Aktivkohle aufweist.

Vorzugsweise ist der Volumenkörper als Pellet ausgebildet.

Es ist durchaus denkbar, dass das Material der äußeren Schicht und/oder das Material der inneren Schicht und/oder das Material des Kerns weitere Zusatzstoffe aufweist, um die Filtrationswirkung und/oder Sorptionswirkung und/oder die physikalischen/chemischen/biologischen Eigenschaften des Volumenkörpers zu verbessern oder an die zu filternden/sorbierenden Stoffe anzupassen. Beispielsweise ist es denkbar, dass der Volumenkörper ein Oxid eines Alkalimetalls und/oder eines Erdalkalimetalls aufweist, insbesondere der Volumenkörper und/oder die äußere Schicht zu einem Anteil

von $\geq 0,1$ Gew.-% und $\leq 10,0$ Gew.-% aus einem Oxid und/oder mehreren Oxiden eines Alkalimetalls und/oder Erdalkalimetalls besteht.

Beispielsweise kann das Material der äußeren Schicht folgende Zusammensetzung aufweisen:

$SiO_2$-Anteil von $80,0 \pm 10,0$ Gew.-%,

$MgO$-Anteil von $2,2 \pm 1,0$ Gew.-%,

$CaO$-Anteil von $1,0 \pm 0,5$ Gew.-%,

$Fe_2O_3$-Anteil von $3,0 \pm 1,0$ Gew.-%,

$K_2O$-Anteil von $1,2 \pm 1,0$ Gew.-%,

$Na_2O$-Anteil von $0,4 \pm 0,3$ Gew.-%,

$Al_2O_3$-Anteil von $8,1 \pm 3,0$ Gew.-%.

Ein Material zur Verwendung als Filtrationsmittel und/oder Sorptionsmittel ist aus einer Vielzahl von Volumenkörpern gebildet, wobei es sich bei zumindest 80 % der Volumenkörper um Volumenkörper handelt, wie in einem oder mehreren der Ansprüche 1 bis 14 beschrieben.

Ein solches Material ist somit ähnlich zu einem Filtermaterial, wie es in üblichen Kiesfiltern/Sandfiltern Verwendung findet. Entsprechend werden sehr grobe Verunreinigungen, insbesondere solche, die den Porendurchmesser der äußeren Schicht überschreiten, in den Freiräumen zwischen den Volumenkörpern zurückgehalten. Diese Verunreinigungen können beispielsweise mittels eines Rückspülprozesses ausgeschwemmt werden.

Als besonders vorteilhaft wird es angesehen, wenn das Material, abhängig vom Anwendungsfall, aus Volumenkörpern gebildet ist, deren äquivalenter Durchmesser $\geq 0,3$ mm und $\leq 0,7$ mm oder $\geq 0,7$ mm und $\leq 1,7$ mm oder $\geq 1,7$ mm und $\leq 2,5$ mm oder $\geq 2,5$ mm und $\leq 6,0$ mm beträgt.

Aus einem solchen Material, das aus einer Vielzahl von Volumenkörpern gebildet ist, oder mehreren solcher Materialien oder aus dessen/deren Weiterbildungen kann ein Filterbett zur Verwendung als Filtrationsmittel und/oder Sorptionsmittel in einer Filtereinrichtung gebildet werden, wobei das Filterbett von einem zu filternden Fluid durchströmbar ist, wobei das Filterbett zumindest zwei in der Strömungsrichtung des Fluids aufeinanderfolgende Lagen aufweist, wobei der äquivalente Durchmesser der Volumenkörper, die das Material der einen Lage bilden, größer ist als der äquivalente Durchmesser der Volumenkörper, die das Material der anderen Lage bilden.

Um die Stabilität des Filterbetts bei einem Betrieb der Filtereinrichtung, insbesondere bei einer Rückspülung des Filterbetts zwecks Regeneration der Volumenkörper, zu verbessern, wird es als vorteilhaft angesehen, wenn die Volumenkörper der einen Lage eine geringere Massendichte als die Volumenkörper der anderen Lage aufweisen. Dies kann beispielsweise dadurch erreicht werden, dass die Volumenkörper der einen Lage einen Kern aufweisen, der als Hohlraum oder Hohlkörper ausgebildet ist, und die Volumenkörper der anderen Lage einen Kern aufweisen, der als Vollkörper ausgebildet ist.

Weitere Merkmale der Erfindung sind in den Unteransprüchen, der Beschreibung der Figuren sowie in den Figuren selbst dargestellt, wobei bemerkt wird, dass alle Einzelmerkmale und alle Kombinationen von Einzelmerkmalen erfindungswesentlich sind.

In den Figuren ist die Erfindung anhand von Ausführungsbeispielen veranschaulicht, ohne auf die beschriebenen Ausführungsbeispiele beschränkt zu sein.

Es zeigen:

Fig. 1    ein Volumenkörper in einer Ansicht gemäß dem Pfeil I in Fig. 2,

Fig. 2    der Volumenkörper in einer Ansicht gemäß der Linie II-II in Fig. 1,

Fig. 3    ein Teilbereich des Volumenkörpers in einer Ansicht gemäß der Linie III in Fig. 2,

Fig. 4    eine fotografische Mikroskopaufnahme eines Volumenkörpers,

Fig. 5    der Volumenkörper gemäß Fig. 4 in einer ersten vergrößerten Ansicht,

Fig. 6    der Volumenkörper gemäß Fig. 4 in einer zweiten vergrößerten Ansicht,

Fig. 7    eine fotografische Mikroskopaufnahme eines weiteren Volumenkörpers,

Fig. 8    eine Filtereinrichtung mit einem Filterbett, das aus zwei Lagen besteht.

Detaillierte Beschreibung

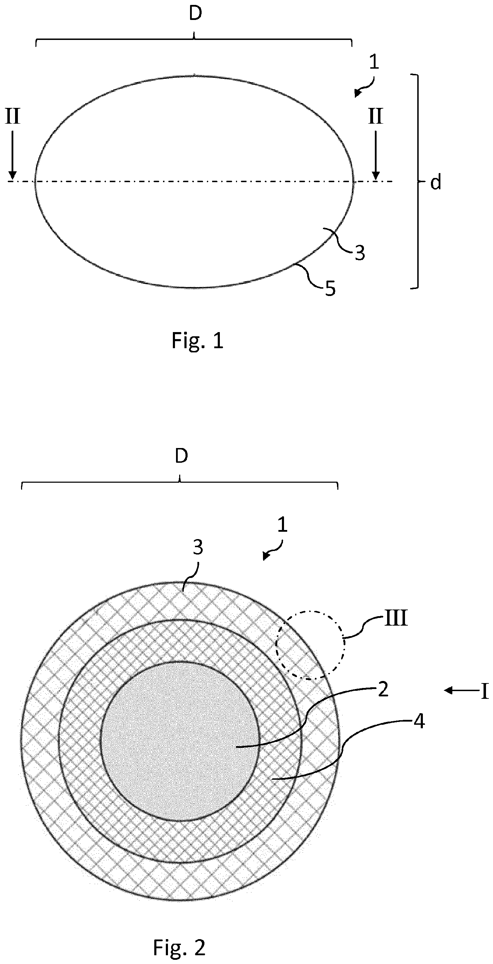

Die Figuren 1 bis 3 zeigen eine schematische Darstellung eines Volumenkörpers 1 zur Verwendung als Filtrationsmittel und/oder Sorptionsmittel, wobei der Volumenkörper 1 einen Kern 2, eine innere Schicht 4 und eine äußere Schicht 3 aufweist, wobei die äußere Schicht 3 die radial innen angrenzende innere Schicht 4 und die innere Schicht 4 den Kern 2 umhüllt.

Die jeweilige Schicht 3, 4 und der Kern 2 bestehen aus unterschiedlichen Materialien.

Zumindest die äußere Schicht 3 des Volumenkörpers 1 besteht aus einem abrasiven Material, wobei das Material durch miteinander verbundene Partikel gebildet ist. Das Material der äußeren Schicht 3 weist eine offene Porosität auf, wobei die offene Porosität durch zwischen den Partikeln ausgebildete und miteinander in Verbindung stehende Hohlräume gebildet ist. Die Partikel sind derart miteinander verbunden, dass die zwischen den Partikeln vorhandenen Hohlräume beim Verbinden der Partikel beibehalten werden. Das Verbinden der Partikel kann beispielsweise mittels Sintern erfolgen. Vorzugsweise weist der Volumenkörper 1 dabei Partikel auf, die eine Ausdehnung von ≤ 40 μm aufweisen.

Der in den Fig. 1 bis 3 dargestellte Volumenkörper 1 weist eine Außenkontur 5 auf, die die Form eines Rotationsellipsoids hat. Dabei beträgt ein Verhältnis einer Längsabmessung D des Volumenkörpers 1 zu einer Querabmessung d des Volumenkörpers 1 ≥ 1,0 und ≤ 1,6.

Das Material der äußeren Schicht 3 weist vorzugsweise eine Porosität auf, die 20 % bis 85 %, insbesondere 60 % bis 80 % beträgt.

Es ist durchaus denkbar, dass die innere Schicht 4 ebenfalls eine offene Porosität aufweist, wobei die Porengröße und/oder die Porosität des Materials der inneren Schicht 4 durchaus unterschiedlich sein kann zu der Porengröße und der Porosität des Materials der äußeren Schicht 3.

Aufgrund der offenen Porosität des Materials der äußeren Schicht 3 ermöglicht es ein solcher Volumenkörper 1, dass ein Fluid durch die zwischen den Partikeln ausgebildeten Hohlräume im Volumenkörper 1 strömen kann, wobei es an einem Ende einer durchgehenden Pore der äußeren Schicht 3 eintritt und an einem anderen Ende der Pore der äußeren Schicht 3 austritt.

Beim Durchtritt des zu filternden Fluids durch den Volumenkörper 1 werden aufgrund der Porosität beispielsweise Feststoffe in den Poren zurückgehalten und/oder unerwünschte Stoffe an der großen spezifischen Oberfläche des Volumenkörpers 1 adsorbiert, wodurch der Volumenkörper 1 gegenüber herkömmlichen Filtrationsmitteln, wie beispielsweise Sand, eine verbesserte Filtrationswirkung und/oder Sorptionswirkung aufweist.

Dadurch, dass die äußere Schicht 3 des Volumenkörpers 1 aus einem abrasiven Material besteht, ist es in einfacher Art und Weise möglich, den Volumenkörper 1 hinsichtlich seiner Filtrationswirkung und/oder Sorptionswirkung zu regenerieren. Zu diesem Zweck wird ein äußerer Teilbereich der äußeren Schicht 3 von dem Volumenkörper 1 entfernt. Das Entfernen des Teilbereichs der äußeren Schicht 3 kann beispielsweise durch mechanische Reibung des Volumenkörpers 1 an weiteren Volumenkörpern 1 innerhalb einer Filtereinrichtung 8, beispielsweise in Form eines Rückspülprozesses, erfolgen.

Da insbesondere die an die Oberfläche angrenzenden Teilbereiche der äußeren Schicht 3, insbesondere die an die Oberfläche des Volumenkörpers 1 angrenzenden Poren bei Verwendung des Volumenkörpers 1 als Filtrationsmittel und/oder Sorptionsmittel mit dem aus dem Fluid herausgefilterten und/oder adsorbierten Stoffen belegt sind, können dies durch Entfernen dieser Teilbereiche entfernt und die darunterliegenden Teilbereiche der äußeren Schicht 3 und/oder der angrenzenden inneren Schicht 4 für das zu filternde Fluid wieder zugänglich gemacht werden.

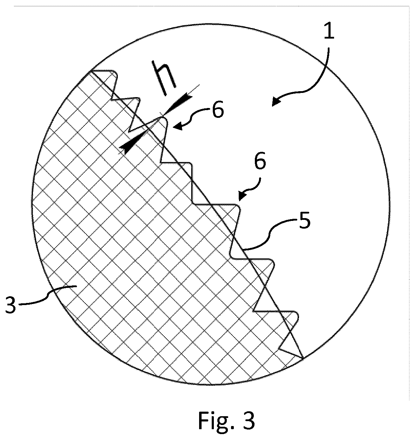

Wie insbesondere der Fig. 3 zu entnehmen ist, weist die äußere Schicht 3 nach außen gerichtete Vorsprünge 6 auf, wobei eine Höhe h des jeweiligen Vorsprungs $6 \geq 0,5\ \mu m$ und $\leq 40\ \mu m$ beträgt. Durch diese Vorsprünge 6 weist der Volumenkörper 1 eine raue Oberfläche auf, wodurch eine Verblockung zwischen Volumenkörpern 1 vermieden wird und zudem der Materialabtrag bei Reibung derartiger Volumenkörper 1 und somit die Regeneration der Volumenkörper 1 verbessert wird.

Folglich ermöglichen es die abrasiven Eigenschaften des die äußere Schicht 3 bildenden Materials, den Volumenkörper 1 in einfacher Art und Weise, beispielsweise durch Rückspülen, zu regenerieren und diesen somit insbesondere häufiger wiederzuverwenden als dies bei üblichen Filtermaterialien der Fall ist.

Zudem ist es aufgrund des Materialabtrags der äußeren Schicht 3 möglich, die aus dem Fluid gefilterten und/oder adsorbierten Stoffe, die in dem abgetragenen Material gebunden sind, besonders effizient aus der Filtereinrichtung 8 zu entfernen, beispielsweise durch Ausschwemmen des abgetragenen Materials.

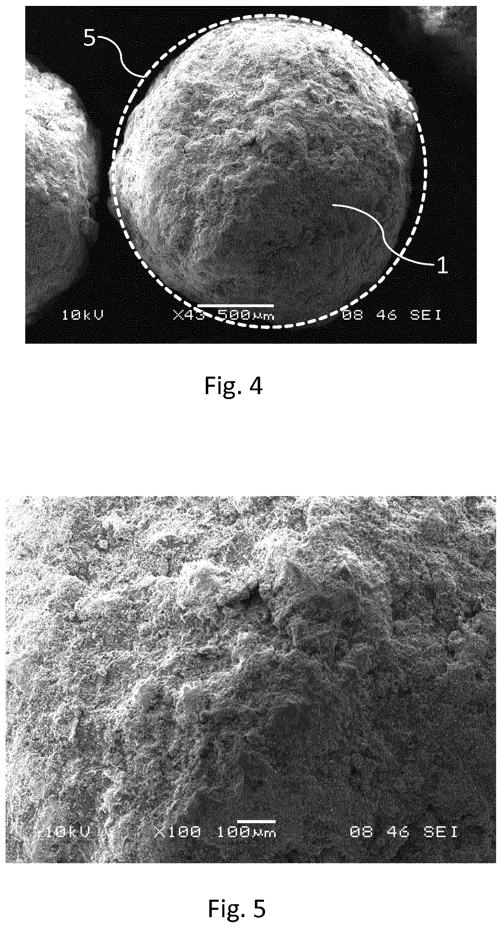

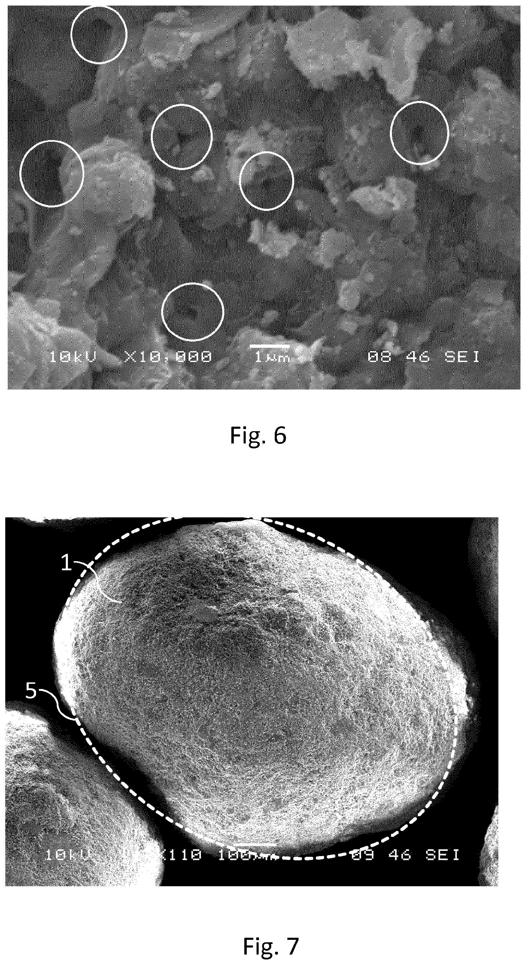

Die Fig. 4 bis 6 zeigen Mikroskopieaufnahmen eines exemplarischen Volumenkörpers 1. Die Fig. 7 zeigt die Mikroskopieaufnahme eines weiteren Volumenkörpers 1.

Der Volumenkörper 1 gem. Fig 4 bis 6 weist eine im Wesentlichen sphärische Außenkontur 5 mit einem Durchmesser von etwa 2 mm auf, wohingegen der Volumenkörper 1 gem. Fig. 7 eine im Wesentlichen rotationsellipsoidförmige Außenkontur 5 aufweist, wobei ein Verhältnis von einer großen Halbachse zu einer kleinen Halbachse etwa 1,3 und die Abmessung der großen Halbachse etwa 0,5 mm beträgt.

Wie insbesondere der Fig. 6 zu entnehmen ist, ist das Material der äußeren Schicht 3 durch miteinander verbundene Partikel gebildet, wobei das gebildete Material eine offene Porosität aufweist, wobei die offene Porosität durch zwischen den Partikeln ausgebildete und miteinander in Verbindung stehende Hohlräume gebildet ist. In der Fig. 6 sind einige dieser Hohlräume mit kreisförmigen Linien markiert.

Die in den Fig. 4 bis 7 dargestellten Volumenkörper 1 bestehen dabei im Wesentlichen aus Diatomit.

Ein durch Schüttung von Volumenkörpern 1 gebildetes Material eignet sich zur Verwendung als Filtermaterial in einer Filtereinrichtung 8.

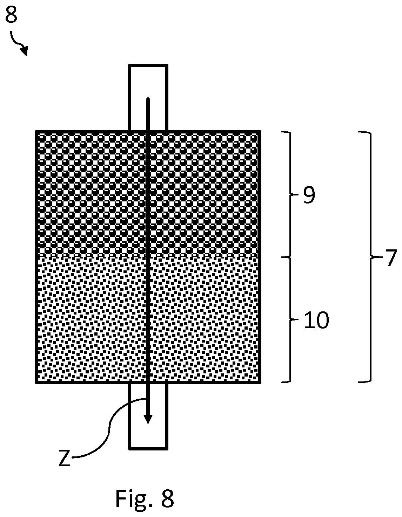

Fig. 8 zeigt eine schematische Darstellung einer Filtereinrichtung 8, wobei die Filtereinrichtung 8 ein Filterbett 7 aufweist, das von einem zu filternden Fluid durchströmbar ist. Das Filterbett 7 weist zumindest zwei in der Strömungsrichtung Z des Fluids aufeinanderfolgende Lagen 9, 10 auf, wobei die jeweilige Lage 9, 10 aus Volumenkörpern 1 der vorgenannten Art gebildet ist, wobei der äquivalente Durchmesser der Volumenkörper 1, die das Material der einen Lage 9 bilden, größer ist als der äquivalente Durchmesser der Volumenkörper 1, die das Material der anderen Lage 10 bilden.

Zwecks Regenerieren der Volumenkörper 1 der jeweiligen Lage 9, 10 kann die Filtereinrichtung 8 in Rückspülung betrieben werden, wobei es bei der Rückspülung zu einer Verwirbelung der jeweiligen Lage 9, 10 kommt. Die Volumenkörper 1 reiben aufgrund der Verwirbelung aneinander, wodurch Teilbereiche der äußeren Schicht 3 des jeweiligen Volumenkörpers 1 abgetragen und vorzugsweise aus der Filtereinrichtung 8 herausgespült werden.

Dadurch kann in einfacher Art und Weise das Filterbett 7 der Filtereinrichtung 8 regeneriert werden.

Bezugszeichenliste

| | |
|---|---|
| 1 | Volumenkörper |
| 2 | Kern |
| 3 | äußere Schicht |
| 4 | innere Schicht |
| 5 | Außenkontur |
| 6 | Vorsprung |
| 7 | Filterbett |
| 8 | Filtereinrichtung |
| 9 | eine Lage |
| 10 | andere Lage |
| D | Längsabmessung |
| d | Querabmessung |
| h | Höhe |

**Patentansprüche**

1. Verwendung eines Volumenkörpers (1) als Filtrationsmittel und/oder Sorptionsmittel, wobei zumindest eine äußere Schicht (3) des Volumenkörpers (1) aus einem abrasiven Material besteht, zur Regeneration des Volumenkörpers (1) mittels Rückspülung, wobei das Material durch miteinander verbundene Partikel gebildet ist, wobei das Material eine offene Porosität aufweist, wobei die offene Porosität durch zwischen den Partikeln ausgebildete und miteinander in Verbindung stehende Hohlräume gebildet ist, wobei ein äquivalenter Durchmesser des Volumenkörpers (1) $\geq 0,3$ mm und $\leq 6,0$ mm beträgt, wobei der äquivalente Durchmesser dadurch definiert ist, dass dieser identisch ist mit einem Durchmesser einer Sphäre, die durch dieselbe Sieböffnung wie der entsprechende Volumenkörper (1) durchgeht.

2. Verwendung nach Anspruch 1, wobei das jeweilige Partikel eine Ausdehnung von $\leq 100\ \mu m$, insbesondere $\leq 40\ \mu m$ aufweist.

**3.** Verwendung nach Anspruch 1 oder 2, wobei die Partikel miteinander verschmolzen oder versintert sind.

**4.** Verwendung nach einem der Ansprüche 1 bis 3, wobei die Porosität des Materials der äußeren Schicht (3) 20% bis 85%, insbesondere 60% bis 80% beträgt.

**5.** Verwendung nach einem der Ansprüche 1 bis 4, wobei zumindest das Material der äußeren Schicht (3) im Wesentlichen oder vollständig aus $SiO_2$ besteht, insbesondere zumindest das Material der äußeren Schicht (3) aus Diatomit besteht.

**6.** Verwendung nach einem der Ansprüche 1 bis 5, wobei ein Verhältnis einer Längsabmessung (D) des Volumenkörpers (1) zu einer Querabmessung (d) des Volumenkörpers (1) ≥1,0 und ≤ 1,6 beträgt.

**7.** Verwendung nach einem der Ansprüche 1 bis 6, wobei der Volumenkörper (1) einen Kern (2) aufweist, wobei die äußere Schicht (3) den Kern (2) umhüllt, vorzugsweise der Kern (2) eine sphärische Form aufweist.

**8.** Verwendung nach Anspruch 7, wobei der Kern (2) als Hohlraum oder als Hohlkörper ausgebildet ist.

**9.** Verwendung nach einem der Ansprüche 1 bis 8, wobei der Volumenkörper (1) mehrere in einer radialen Richtung aufeinander folgende Schichten (3, 4) aufweist, insbesondere die jeweilige Schicht (3, 4) eine radial innen angrenzende innere Schicht (4) und/oder den Kern (2) umhüllt.

**10.** Verwendung nach Anspruch 7 bis 9, wobei der Kern (2) und/oder eine innere Schicht (4) aus einem Material besteht, das sich vom Material der äußeren Schicht (3) nach der chemischen Zusammensetzung und/oder der Massendichte und/oder der Porosität unterscheidet.

**11.** Verwendung nach einem der Ansprüche 7 bis 10, wobei der Kern (2) und/oder eine innere Schicht (4) aus einem soliden oder geblähten Glas oder einem Schaumglas besteht, vorzugsweise der Kern (2) durch eine Mikroglasperle, insbesondere durch eine hohle Mikroglasperle gebildet ist.

**12.** Verwendung nach einem der Ansprüche 7 bis 11, wobei der Kern (2) mit einer angrenzenden Schicht (3, 4) und/oder eine der Schichten (3, 4) mit einer angrenzenden Schicht (3, 4) verbunden, insbesondere verschmolzen, besonders bevorzugt versintert ist.

**13.** Verwendung nach einem der Ansprüche 7 bis 12, wobei eine innere Schicht (4) und/oder der Kern (2) Poren aufweist, wobei ein arithmetisch gemittelter Durchmesser dieser Poren geringer ist als ein arithmetisch gemittelter Durchmesser der Poren der äußeren Schicht (3).

**14.** Verwendung nach einem der Ansprüche 7 bis 13, wobei der Kern (2) und/oder eine der inneren Schichten (4) Aktivkohle aufweist.

**15.** Verwendung nach einem der Ansprüche 1 bis 14, wobei der Volumenkörper mit weiteren Volumenkörpern (1) in Form einer regelosen Schüttung in einer Filtereinrichtung (8) verwendet wird.

**Claims**

**1.** Use of a volume body (1) as filtration medium and/or sorption medium, wherein at least one outer layer (3) of the volume body (1) consists of an abrasive material, for regeneration of the volume body (1) by means of backflushing, wherein the material is formed by mutually bonded particles, wherein the material has an open porosity, wherein the open porosity is formed by mutually connected cavities that are formed between the particles, wherein an equivalent diameter of the volume body (1) is ≥ 0.3 mm and ≤ 6.0 mm, wherein the equivalent diameter is defined in that it is identical to a diameter of a sphere that passes through the same sieve opening of the corresponding volume body (1).

**2.** Use according to Claim 1, wherein the respective particle has an extent of ≤ 100 $\mu$m, especially ≤ 40 $\mu$m.

**3.** Use according to Claim 1 or 2, wherein the particles have been fused or sintered to one another.

**4.** Use according to any of Claims 1 to 3, wherein the porosity of the material of the outer layer (3) is 20% to 85%, especially 60% to 80%.

**5.** Use according to any of Claims 1 to 4, wherein at least the material of the outer layer (3) consists essentially or entirely of $SiO_2$, with at least the material of the outer layer (3) especially consisting of diatomite.

**6.** Use according to any of Claims 1 to 5, wherein a ratio of a longitudinal dimension (D) of the volume body (1) to a transverse dimension (d) of the volume body (1) is ≥ 1.0 and ≤ 1.6.

**7.** Use according to any of Claims 1 to 6, wherein the volume body (1) has a core (2), wherein the outer layer (3) encases the core (2), the core (2) preferably having a spherical shape.

**8.** Use according to Claim 7, wherein the core (2) takes the form of a cavity or of a hollow body.

**9.** Use according to any of Claims 1 to 8, wherein the volume body (1) has multiple layers (3, 4) in succession in one radial direction, and the respective layer (3, 4) especially encases a radially adjoining inner layer (4) and/or the core (2).

**10.** Use according to Claim 7 to 9, wherein the core (2) and/or an inner layer (4) consists of a material that differs from the material of the outer layer (3) in terms of chemical composition and/or bulk density and/or porosity.

**11.** Use according to any of Claims 7 to 10, wherein the core (2) and/or an inner layer (4) consists of a solid or blown glass or a foam glass, and the core (2) is preferably formed by a glass microbead, especially by a hollow glass microbead.

**12.** Use according to any of Claims 7 to 11, wherein the core (2) is bonded to an adjoining layer (3, 4) and/or one of the layers (3, 4) to an adjoining layer (3, 4), especially fused, more preferably sintered.

**13.** Use according to any of Claims 7 to 12, wherein an inner layer (4) and/or the core (2) has pores, wherein an arithmetic average diameter of these pores is lower than an arithmetic average diameter of the pores of the outer layer (3).

**14.** Use according to any of Claims 7 to 13, wherein the core (2) and/or one of the inner layers (4) includes activated carbon.

**15.** Use according to any of Claims 1 to 14, wherein the volume body is used together with further volume bodies (1) in the form of a random bed in a filter device (8).

**Revendications**

**1.** Utilisation d'un corps volumique (1) en tant que moyen de filtration et/ou moyen de sorption, au moins une couche extérieure (3) du corps volumique (1) étant constituée d'un matériau abrasif, pour la régénération du corps volumique (1) au moyen d'un lavage à contre-courant, le matériau étant formé de particules reliées entre elles, le matériau présentant une porosité ouverte, la porosité ouverte étant formée par des cavités formées entre les particules et reliées entre elles, un diamètre équivalent du corps volumique (1) étant $\geq 0,3$ mm et $\leq 6,0$ mm, le diamètre équivalent étant défini par le fait que celui-ci est identique avec un diamètre d'une sphère qui traverse la même ouverture de tamis que le corps volumique (1) correspondant.

**2.** Utilisation selon la revendication 1, chaque particule présentant une dilatation de $\leq 100$ $\mu$m, en particulier $\leq 40$ $\mu$m.

**3.** Utilisation selon la revendication 1 ou 2, les particules étant fusionnées ou frittées entre elles.

**4.** Utilisation selon l'une quelconque des revendications 1 à 3, la porosité du matériau de la couche externe (3) étant de 20 % à 85 %, en particulier de 60 % à 80 %.

**5.** Utilisation selon l'une quelconque des revendications 1 à 4, au moins le matériau de la couche externe (3) étant essentiellement ou totalement constitué de $SiO_2$, en particulier au moins le matériau de la couche externe (3) étant constitué de diatomite.

**6.** Utilisation selon l'une quelconque des revendications 1 à 5, un rapport d'une dimension longitudinale (D) du corps volumique (1) sur une dimension transversale (d) du corps volumique (1) étant $\geq 1,0$ et $\leq 1,6$.

**7.** Utilisation selon l'une quelconque des revendications 1 à 6, le corps volumique (1) présentant un noyau (2), la couche externe (3) enveloppant le noyau (2), de préférence le noyau (2) présentant une forme sphérique.

**8.** Utilisation selon la revendication 7, le noyau (2) étant formé en tant que cavité ou en tant que corps creux.

**9.** Utilisation selon l'une quelconque des revendications 1 à 8, le corps volumique (1) présentant plusieurs couches (3, 4) consécutives dans une direction radiale, en particulier chaque couche (3, 4) enveloppant une couche interne (4) adjacente radialement vers l'intérieur et/ou le noyau (2).

**10.** Utilisation selon les revendications 7 à 9, le noyau (2) et/ou une couche interne (4) étant constitué(e) d'un matériau qui se différencie du matériau de la couche externe (3) sur le plan de la composition chimique et/ou de la densité massique et/ou de la porosité.

**11.** Utilisation selon l'une quelconque des revendications 7 à 10, le noyau (2) et/ou une couche interne (4) étant constitué(e) d'un verre solide ou soufflé ou d'un verre cellulaire, de préférence le noyau (2) étant formé d'une microperle de verre, en particulier d'une microperle de verre creuse.

**12.** Utilisation selon l'une quelconque des revendications 7 à 11, le noyau (2) étant relié à une couche adjacente (3, 4) et/ou l'une des couches (3, 4) étant reliée avec une couche adjacente (3, 4), en particulier fusionné(e), particulièrement préférablement fritté(e) .

13. Utilisation selon l'une quelconque des revendications 7 à 12, une couche interne (4) et/ou le noyau (2) présentant des pores, une moyenne arithmétique du diamètre de ces pores étant plus petite qu'une moyenne arithmétique du diamètre des pores de la couche externe (3) .

14. Utilisation selon l'une quelconque des revendications 7 à 13, le noyau (2) et/ou l'une des couches internes (4) présentant du charbon actif.

15. Utilisation selon l'une quelconque des revendications 1 à 14, le corps volumique étant utilisé avec d'autres corps volumiques (1) sous forme de lit irrégulier dans un dispositif de filtration (8).

Fig. 1

Fig. 2

Fig. 3

Fig. 4

Fig. 5

Fig. 6

Fig. 7

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10022798 A1
- DE 10163977 A1
- US 20070189944 A1
- US 20090280313 A1
- WO 03072498 A1
- JP 2004130268 A
- US 20110183142 A1